# EUROPEAN PATENT APPLICATION

(11) **EP 2 385 730 A2**
(43) Date of publication of application: **09.11.2011**
(21) Application number: 11275078.1
(22) Date of filing: 05.05.2011
(51) Int. Cl.: H04W 48/18, H04W 88/06

(54) **Communication network selection**

(30) Priority: 05.05.2010 GB 1007502
(71) Applicant: Vodafone IP Licensing Limited, Newbury, Berkshire RG14 2FN (GB)
(72) Inventor: Noethen, Benedikt, Newbury, Berkshire RG14 2FN (GB); Irmer, Ralf, Newbury, Berkshire RG14 2FN (GB); Bhat, Prakash, Newbury, Berkshire RG14 2FN (GB)
(74) Representative: Keston, David Arthur

(57) **Abstract**

A mobile telecommunications device 1 includes cellular communication means for communicating with a cellular telecommunications network base station 3,4,5, wireless communication means for communicating with a wireless access point 33, and control means 34 for selectively enabling the wireless communication means in response to a trigger. The trigger may be the launch of a web browser of a request for a download of data.

## Description

### TECHNICAL FIELD

The present invention relates to a mobile telecommunications device including cellular communication means operable to communicate with a cellular telecommunications network base station and wireless communication means operable to communicate with a wireless access point. The present invention also relates to a method and computer program.

### BACKGROUND TO THE INVENTION

Cellular telecommunications devices, such as those operating in accordance with the GSM, UMTS [RTM], HSPA, WiMAX or LTE Standards communicate wirelessly with base stations of a cellular telecommunications network using a cellular telecommunications bearer. Known mechanisms allow the mobile devices to move between the base stations without interruption of telecommunications services and without requiring user interaction. The radio spectrum used for cellular telecommunications is licensed for use by an appropriate governmental authority, such as OFCOM in the UK or the FCC in the USA.

WiFi mobile telecommunications devices are also known which communicate wirelessly with one or more WiFi access points. The radio spectrum used for WiFi communications uses a non cellular telecommunications bearer and is unlicensed by a governmental authority. Registration with a WiFi access point, and movement between WiFi access points, is generally not straightforward for the user in the way that it is with a cellular telecommunications device. WiFi mobile telecommunications devices typically include a WiFi client for controlling registration with an access point. Such WiFi clients generally have a limited functionality. The setting of WiFi preferences in a WiFi mobile telecommunications device generally requires a considerable amount of user interaction and expertise, that can be beyond the capabilities or patience of the typical user.

Whilst WiFi clients of the type described above are known that allow limited switching between access points, and cellular handover and reselection mechanisms are known which allow movement between cellular telecommunications network base stations, there are no known arrangements which allow a satisfactory selection between different air interface types, such as between UMTS and WiFi in an intelligent manner and without requiring significant user interaction and technical knowledge.

WiFi clients have been proposed that check the signal strength (in dB) of WiFi signals from nearby access points and select an access point according to the signal strength. However, signal strength is only an indication of quality. The effects of interference, network congestion, and whether or not internet connectivity is available are not considered.

Also, such clients do not take into consideration power consumption. Typically, power is wasted by scanning air interfaces and maintaining unnecessary air interfaces (for example, after a communication has finished). Minimising power consumption is an important consideration for mobile devices, particularly mobile devices that are used as telephones, such as "smart phones", where battery weight and size must be kept to a minimum to allow easy portability of such devices. Power consumption considerations are not so important for larger devices, such as laptop computers.

US 2006/0291385 discloses a program for a personal computer that tests available wireless connections pre-configured by the user (such as WiFi and GPRS) by sending a test data packet over each of these wireless connections and determining whether transmission of the data packet is successful. One of the wireless networks is then selected in dependence upon successful transmission of the test data packet. The procedure for testing and selecting available wireless networks is triggered only when the personal computer is not in a network connected state.

JP 2004 128917 discloses an arrangement where a wireless terminal determines communication quality to different a beacons/base stations and selects the base station having the best communication quality as the base station with which the wireless terminal should be associated. The wireless terminal then sends network setup information to the base station to allow a connection to be established.

### SUMMARY OF THE INVENTION

According to a first aspect of the present invention, there is provided a mobile telecommunications device including cellular communication means operable to communicate with a cellular telecommunications network base station, wireless communication means operable to communicate with a non-cellular wireless access point, and control means operable to selectively automatically enable the wireless communication means in response to a trigger.

In the embodiment the mobile telecommunications device operates in a cellular telecommunications mode in a default state, and changes from that state in response to a trigger.

The trigger may be launch of a web browser and/or a request for transfer of data. In the embodiment the data is user date (e.g. content to be consumed by the user), rather than control data. The trigger may be the commencement of a bandwidth intensive activity suck as video streaming.

The control means may be a client on the mobile device.

The control means may determine the quality of the communication path to the access point, and may select one of a plurality of access points in dependence upon the quality of the communication path to each of the access points. This allows the access point that provides the best service to be selected.

The control means may switch between access points in dependence upon changes in quality of the communication path. This allows the quality of communication service to the mobile telecommunications device to be maintained when the access point to which it is connected begins to provide a poorer service (such as might happen when the mobile telecommunications device moves away from that access point).

The control means may be operable to disable the wireless communication means. The control means may detect the power supply status of a mobile telecommunications device, and may use this information to disable the wireless communication means. For example, if it is determined that the battery of the mobile telecommunications device is below a predetermined capacity (such as 20%), the control means may disable the wireless communication means, so as to reduce power consumption and prolong the remaining battery life.

In the embodiment to be described dynamic and intelligent selection of an appropriate air interface (cellular telecommunications network such as HSPA, LTE or WiMAX, on the one hand, or a different type of non-cellular/unlicensed wireless network, such as WiFi or Bluetooth, on the other) is implemented without the need for much user interaction or background technical knowledge. Satisfactory internet connectivity is provided with a required level of quality of service. When the currently used communication system does not provide satisfactory performance (e.g. due to interference, or the user moving to another location), handover to another air interface (e.g. from UMTS to WiFi or from WiFi to UMTS, or from one WiFi network to another) is performed without the need for complicated user interaction, and without a noticeable interruption in services provided by the mobile device to the user.

The embodiment provides an algorithm, which will choose the best connection for the user without any interaction. The algorithm collects information about the current connection and other available network interfaces. The algorithm may also monitor the user behaviour. When the user is requesting data (e.g. from an internet service), the algorithm will detect the data request and perform a network check. It will check the current network connection and will check also other available networks (e.g. WiFi).

The algorithm may check the connection speed of the current connection periodically. If the Quality of Service (QoS) of the current connection is bad (threshold below a predefined value), the algorithm will check other possible network connections. No user interaction with the device is required.

The algorithm may preselect networks with channel quality indicators (e.g. signal strength and/or network speed) better than a specified value. The algorithm will then select the best connection based on network priority and current network qualities.

The algorithm may then connect and perform a handover to the network and checks the quality of service periodically. If the QoS a criterion is fulfilled, the algorithm will use this connection. If the signal level or the data throughput of the current connection is lower than a predefined value, the algorithm tries to connect to another network, and will perform a handover to that network.

The algorithm may collect status information about the current state of the mobile device. The algorithm may disconnect the mobile device from high power consuming networks (such as WiFi), when the mobile device is idle and no communication session is active or battery power is low. It should then switch to a less power consuming network like 3G.

The user can control the behaviour of the algorithm by defining network priorities and thresholds. The algorithm may request a network provider to update network priorities and configurations, etc.

The present invention also provides a method of operating a mobile telecommunications device, a computer program and a computer-readable medium as defined in the claims.

### BRIEF DESCRIPTION OF THE DRAWINGS

For a better understanding of the present invention an embodiment will now be described by way of example, with reference to the accompanying drawings, in which:
Figure 1 is a diagrammatic drawing of key elements of a network including a mobile telecommunications network and a service provider; and
Figure 2 is a flow chart showing the steps performed by a client according to the embodiment of the invention.

### DETAILED DESCRIPTION OF EMBODIMENTS OF THE INVENTION

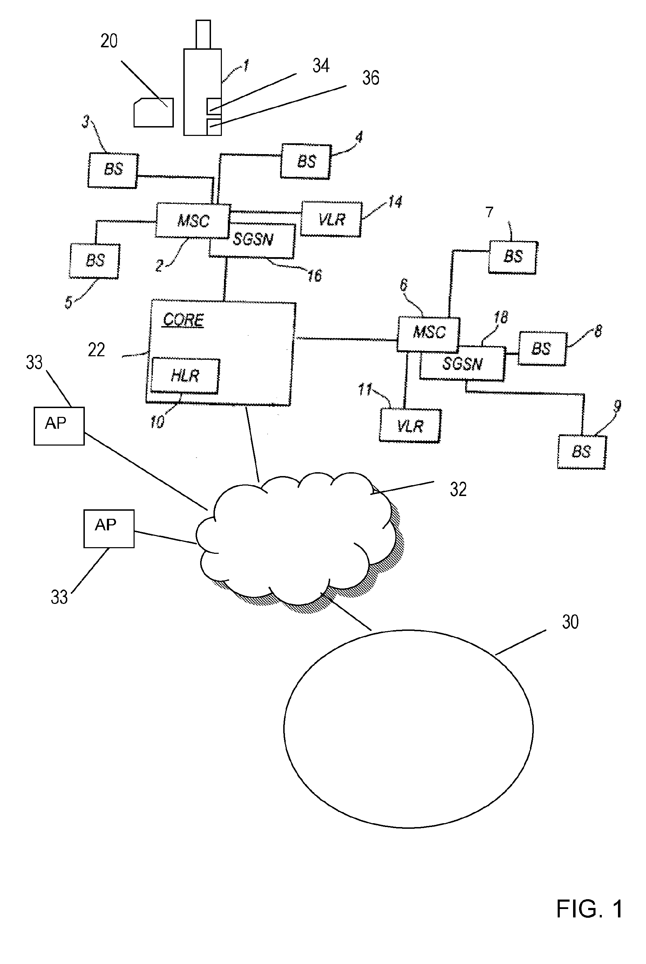

Key elements of a mobile or cellular telecommunications network, and its operation, will now briefly be described with reference to Figure 1.

The term "base station" refers hereafter to: a base transmission station (BTS) - in the 2G GSM standards; a "node B" - in the 3G UMTS [RTM] standards; an "eNode B" - in the proposed 4G LTE standard; and any network entity that performs analogous functions to the preceding entities.

Each base station corresponds to a respective cell of its cellular or mobile telecommunications network and receives calls from and transmits calls to a mobile device in that cell by wireless radio communication in one or both of the circuit switched or packet switched domains. Such a subscriber's mobile device is shown at 1. The mobile device may be a handheld mobile telephone, such as a smart phone.

In a 2G mobile telecommunications network, such as GSM, each base station subsystem (BS) comprises at least one base transmission station (BTS) and a base station controller (BSC). The BSC typically controls more than one BTS. The BTSs and BSCs together comprise the 2G radio access network (RAN).

In a 3G mobile telecommunications network, such as UMTS [RTM], each base station subsystem comprises at least one node B and a radio network controller (RNC). An RNC may control more than one node B. The node Bs and RNCs comprise the 3G radio access network.

In the proposed 4G LTE mobile telecommunications network, each base station subsystem comprises an eNode B which combines certain functionalities of a 3G RNC and a Node B. These eNode Bs are arranged in groups and each group of eNode Bs is likely to be controlled by a Mobility Management Entity (MME) and a User Plane Entity (UPE). Since LTE is not yet implemented, this architecture may change.

The exact network configuration is not essential to the invention, so of course other mobile network configurations are possible.

Conventionally, the base stations are arranged in groups and each group of base stations is controlled by one mobile switching centre (MSC), such as MSC 2 for base stations 3, 4 and 5. As shown in Figure 1, the network has another MSC 6, which is controlling a further three base stations 7, 8 and 9. In practice, the network will incorporate many more MSCs and base stations than shown in Figure 1. The base stations 3, 4, 5, 7, 8 and 9 each have dedicated connection to their MSC 2 or MSC 6 - typically a cable connection.

The MSCs 2 and 6 support communications in the circuit switched domain - typically voice calls. Corresponding SGSNs 16 and 18 are provided to support communications in the packet switched domain - such as GPRS data transmissions. The SGSNs 16 and 18 function in an analogous way to the MSCs 2 and 6. The SGSNs 16, 18 are equipped with an equivalent to the VLRs 11, 14 used in the packet switched domain.

Each subscriber to the network is provided with a smart card or SIM 20 which, when associated with the user's mobile device 1 identifies the subscriber to the network. The SIM card is pre-programmed with a unique identification number, the "International Mobile Subscriber Identity" (IMSI) that is not visible on the card and is not generally known to the subscriber. The subscriber is issued with a publicly known number, that is, the subscriber's telephone number, by means of which callers initiate calls to the subscriber. This number is the MSISDN.

The network includes a home location register (HLR) 10 which, for each subscriber to the network, stores the IMSI and the corresponding MSISDN together with other subscriber data, such as the current or last known MSC or SGSN of the subscriber's mobile device 1.

When mobile device 1 is activated, it registers itself in the network by transmitting the IMSI (read from its associated SIM card 20) to the base station 3 associated with the particular cell in which the device 1 is located. In a traditional network, the base station 3 then transmits this IMSI to the MSC 2 with which the base station 3 is registered. In a network using the functionality described in 3GPP TS 23.236, the base station follows prescribed rules to select which MSC to use, and then transmits this IMSI to the selected MSC.

MSC 2 now accesses the appropriate storage location in the HLR 10 present in the core network 22 and extracts the corresponding subscriber MSISDN and other subscriber data from the appropriate storage location, and stores it temporarily in a storage location in a visitor location register (VLR) 14. In this way, therefore the particular subscriber is effectively registered with a particular MSC (MSC 2), and the subscriber's information is temporarily stored in the VLR (VLR 14) associated with that MSC.

When the HLR 10 is interrogated by the MSC 6 in the manner described above, the HLR 10 additionally performs an authentication procedure for the mobile device 1. The HLR 10 transmits authentication data to the MSC 2 in "challenge" and "response" forms. Using this data, MSC 6 passes a "challenge" to the mobile device 1 through base station 7. Upon receipt of this data, the mobile device 1 passes this data to its SIM and produces a "response". This response is generated using an encryption algorithm on the SIM and a unique key Ki on the SIM. The response is transmitted back to the MSC 6 which checks it against its own information for the subscriber which checks it against information that it has obtained for that subscriber from the HLR 10 in order to complete the authentication process. If the response from the mobile device 1 is as expected, the mobile device 1 is deemed authenticated. At this point the MSC 6 requests subscription data from the HLR 10. The HLR 10 then passes the subscription data to the VLR 14.

The authentication process will be repeated at regular intervals while the mobile device 1 remains activated and can also be repeated each time the mobile device 1 makes or receives a call, if required. This authentication process confirms the identity of the user to the network, so the user can be charged for telecommunications services.

Each of the MSCs of the network (MSC 2 and MSC 6) has a respective VLR (14 and 11) associated with it and operates in the same way as already described when a subscriber activates a mobile device 1 in one of the cells corresponding to one of the base stations controlled by that MSC.

When the subscriber using mobile device 1 wishes to make a call, they enter the telephone number of the called party in the usual manner. This information is received by the base station 3 and passed on to MSC 2. MSC 2 routes the call towards the called party. By means of the information held in the VLR 14, MSC 2 can associate the call with a particular subscriber and thus record information for charging purposes.

The functionality just described may also apply to the proposed LTE mobile telecommunications network, with its eNode Bs performing the functionality of the base stations and the MME/UPE performing the functionality of the MSCs/VLRs. It is also to be appreciated that the functionality just described is one example of a network in which the embodiments of the invention may be implemented.

From the description above, it will be understood that the coverage area of a mobile telecommunications network is divided into a plurality of cells, each of which is served by a respective base station.

Mobile networks such as 2G (GSM) or 3G (UMTS) telecommunications networks have an active state of communication with their mobile devices and an inactive/idle state of communication with their devices. When in the active state, as the mobile devices move between different cells of the network, the communication session is maintained by performing a "handover" operation between the cells. In the inactive/idle state, as a mobile device moves between different cells of the network the mobile device performs "cell reselection" to select the most appropriate cell on which to "camp" in order that the mobile device can be paged by the network when mobile terminating data is destined for that mobile device.

Calculations to determine whether to perform a handover from one base station to another base station are performed by the network, whereas calculations whether to perform cell reselection are performed by the mobile device.

In addition to a cellular telecommunications network, Figure 1 also shows a service provider 30, which may, for example, provide news reports to subscribers such as the user of mobile device 1. The user of the mobile device 1 may connect the service provider 30 via the internet 32.

GSM, UMTS [RTM] and LTE networks operating in the manner generally described above are referred to as "cellular" telecommunications systems. Such systems generally operate in accordance with standards specified by ETSI. Such cellular telecommunications networks generally cover a large geographical area (typically a major portion of a country) and provide substantially continuous coverage through a multiplicity of cells spread over the geographical coverage area. The cells may be macro cells or femto cells. As discussed above, movement between the cells when a mobile device is in an inactive or idle mode is performed by cell reselection. Movement between the cells whilst the mobile device is in the active state is facilitated by a handover procedure, which allows the communication session to be continued as the mobile device moves through a plurality of cells. WiMAX is another example of a cellular telecommunications system. Cellular telecommunications systems communicate using a cellular telecommunication bearer. Cellular telecommunications systems use licensed radio spectrum.

A different wireless technology is known as WiFi. WiFi devices operate in accordance with IEEE 802.11 standards. WiFi devices use unlicensed spectrum. In a WiFi network, communications to/from a WiFi mobile device are transmitted wirelessly to one or more access points (APs) 33. These communications are then onwardly transmitted via the internet 32. Movement between access points 33 is possible in some circumstances. Automatic de-registration from one access point and registration within another access point (for example, in response to a reduction in signal strength from the original access point) may be performed in accordance with proprietary algorithms.

Cellular mobile telecommunications devices are known that are also capable of communicating using WiFi.

The non-cellular telecommunications network used in the embodiment is WiFi but could be any non-cellular telecommunications network, such as Bluetooth.

According to an embodiment of the invention an intelligent air interface selection client 34 is provided for the mobile device 1, such as a smart phone, which is capable of communication over a plurality of air interfaces - in the embodiment, over a UMTS [RTM] cellular telecommunications network and in accordance with WiFi standards.

In its "default" state, the client 34 uses the UMTS [RTM] air interface as this typically provides radio coverage over a large geographical area. However, as will be known to those skilled in the art, in some circumstances, WiFi radio connection can provide higher data transfer rates. Using WiFi connections when available also frees up capacity of the UMTS [RTM] air interface for other users.

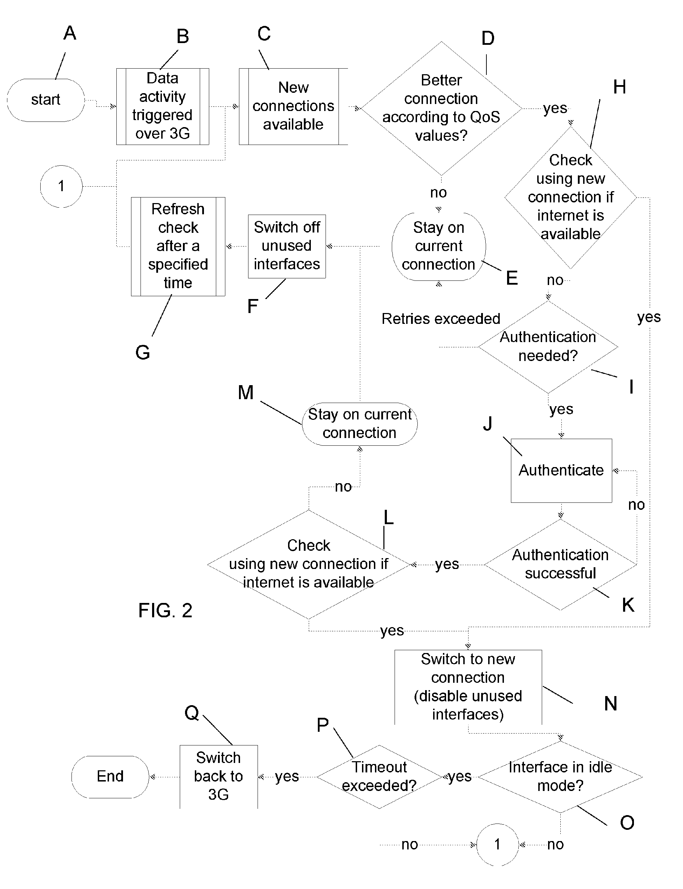

The steps performed by the client 34 will now be described with reference to the flow chart of Figure 2.

The client 34 is initiated at **step A.** As mentioned above, in its default state, the client 34 causes the mobile device to connect over the UMTS [RTM] air interface via UMTS [RTM] base stations of the network with which the user has a subscription (or a roaming agreement). In this communications state the mobile device may be in the idle or inactive state or in the active state. In the idle or inactive state, the mobile device performs cell reselection as the device moves relative to base stations or as the radio conditions vary. Likewise, when the mobile device is in the active communication state, a handover operation is performed between base stations to maintain a communication session. These procedures will be known to those skilled in the art and will not be described in detail here.

The client 34 monitors for particular events that might optimally benefit from a change in the air interface used.

At **step B** such an event is detected. Such an event may be the launching of a web browser, a request for data (such as from an internet service - for example service provider 30). Other events such as the initiation of a "traditional" circuit switched voice call, or the sending of an SMS or MMS message, which are not optimally handled using the WiFi radio interface will not trigger any action in step B, but the mobile device will remain using the UMTS [RTM] air interface.

At step C the client 34 operates the cellular and WiFi radio interfaces of the mobile device to determine the networks available, and to determine the quality of service provided by each of those networks. The quality of service may include the signal strength and a measure of interference and/or network congestion.

At **step D** it is determined whether one of these network connections provides a better network connection for the communication type requested by the user than the existing UMTS [RTM] connection. At step B the type of data communication request may be determined (such as streaming, ftp and the like), and this information may be used in step D to select a network which is optimal for that transmission type.

At **step E,** if it is determined at step **D** that none of the other networks provide a better connection than the current UMTS [RTM] network connection, the current UMTS [RTM] connection is maintained.

At **step F** the unused air interfaces (in this example the WiFi air interfaces) are deactivated. This prevents the battery of the mobile device from being depleted unnecessarily.

At **step G** it is determined whether a predetermined time period has passed before repeating step C and checking the network connections available in the manner described above. After the time period has passed, the WiFi air interfaces are reactivated and steps C and D are preformed as described above. However, in the time between the WiFi air interface being deactivated in step F until the predetermined time defined in step G the WiFi interface is disabled and therefore does not consume power.

If at step D it is determined that another network connection provides better connection for the type of communication requested by the user, at step H, the network connection with the best quality of service (measured at step C) is tested to determine whether a connection to the internet 32 is available. For example, it is tested whether a data packet can be successfully transmitted to the internet 32.

If at step H no internet connection is available, it is determined at step I whether authentication is necessary. If authentication is unnecessary (but connection to the internet is nevertheless not available), then the procedure returns to step E and the current UMTS [RTM] connection is maintained. Steps H and I may be repeated a number of times for a particular network connection in case the inability to connect to the internet was an isolated incident.

If at step I it is determined that authentication is needed, then, at step J, authentication is performed. The mobile device 1 is modified to include a memory 36 which stores the authentication credentials of known networks for use in step J. In this way, authentication can be performed without requiring any action of the user. If authentication credentials for a particular network are not available, then this may be automatically obtained, for example by connection to the core 22 of the UMTS [RTM] network, or the user may be prompted to provide authentication credentials.

At **step K** it is determined whether the authentication procedure performed at step J is successful. If the authentication is not successful, then step J is repeated. Optionally, a predetermined number of attempts to authenticate with a particular network are performed (at step J), and then the procedure reverts to step E.

If, on the other hand, it is determined at step K that authentication is successful, then step L is performed. At step L it is determined if a connection to the internet is available using the new network. For example, it is tested whether a data packet can be successfully transmitted to the internet 32. If at step L it is determined that connection is not possible, then, at step M, the current UMTS [RTM] connection is maintained and the procedure returns to step F.

On the other hand, if, at step L, it is determined that an internet connection is available using the new network connection, then, at **step N,** the mobile device switches to the new network and uses this to perform the data communication requested by the user at step B. Unused air interfaces are may then be disabled. These air interfaces may be air interfaces for communicating with other WiFi networks or with cellular telecommunications networks, such as the UMTS [RTM] network. The UMTS [RTM] network connection may however be maintained to allow delivery of SMS, MMS and circuit switched voice calls.

At **step O** the communication session over the selected network is monitored to determine whether the communication session becomes idle (i.e. data transmission ends for a period of time).

If at step O it is determined that the communication session has become idle, at **step P** the duration of the idle period is determined. If the duration of the idle period exceeds a predetermined threshold, then, at **step Q,** the client 34 causes the mobile device to revert to the UMTS [RTM] air interface. The WiFi air interface is then disabled.

If at step O it is determined that the communication session is not idle, or if at step **P** it is determined that the duration of the idle period is below the predetermined threshold, then the procedure returns to step C. As described above, at step C and subsequent steps, the network connections are evaluated and the transfer to an alternative network is made if this provides a better quality of service. In this way, the transfer between networks is possible during a communication session, so that the optimum quality of service is available.

The client 34 selects a network based on the following criteria.
- user activity (step B),
- signal strength and quality of service/data throughput (steps C, D).

The procedure may be modified to allow the user to define rules to prevent or force a switch to a particular network in specified circumstances. For example, the switch to an alternative network may be prevented when an https connection is required. Conversely, switching to a particular network may be compulsory when a particular program or connection type is requested by the user.

Step B may be modified to include an evaluation of the available capacity of the battery of the mobile device. For example, if it is determined that the battery has less than 20% of its capacity remaining, the subsequent steps to step B may not be performed, so that WiFi air interfaces are not activated and alternative networks are not discovered. This will prolong the remaining battery life of the mobile device.

At step B of the flow chart described above a decision to evaluate the available networks is made in dependence upon the launch of a particular program or the initiation of a particular connection activity. Alternatively, or additionally, at step B the location of the mobile device may be used to determine when to perform the subsequent steps. That is, if it is determined that the mobile device is within a predetermined area, the available networks are evaluated. The location of the mobile device may be determined using GPS or the identifiers of the base stations in the vicinity of the mobile device (or by any other suitable means such as cell triangulation).

The mobile device 1 may store information about the history of previous connections with each network - for example, storing an indicator of the quality of the connection with each network previously. At step D of the flow chart above, such historical stored data may be used to help determine which network is likely to provide the best quality. That is, the decision as to which network should be used is based on the current quality measurement and also on the historical quality measurements for that network. For example, a network which has currently the best quality connection but has a history of connection problems may not be selected by the algorithm, and the algorithm may select a network which has a slightly lower quality of service currently but which has a history of consistent quality of service. The historical data may also record the location of the mobile device where the historical data was obtained, so that any decision can take into account the historical performance of the network at particular locations. If historically a network has provided poor performance in a particular location, this can be used to improve the selection of the best network in step D if the current location of the mobile device 1 is known.

The decision to select a particular network, based on current quality data, historical quality data, location and any other criteria can be made using a decision matrix of positive and negative factors for each network being given a weighting, so that the optimum network can be selected intelligently based on multiple criteria.

In addition to the steps described above, the procedure may also detect where the network with which the mobile device is currently registered falls below a particular quality threshold (or becomes completely unavailable). In response to such an event, step B and subsequent steps are performed to identify an alternative suitable network for continuing with the communication session.

From the above discussion it will be apparent that the embodiment may provide various advantages, including:
● The client 34 will connect the user to the best available network, when the user is using a particular network service (e.g. internet).
● The authentication to a network may be done by the client 34.
● No user knowledge or interaction is required to connect the user to the best available network service. No network knowledge is required.
● The client 34 will try to save battery by switching back to a less power consuming network interface (e.g. 3G). Based on battery level the algorithm will check less power consuming connections.
● Performing handover to different network interfaces.

In the embodiment described above, the default network connection is UMTS [RTM]. If should be understood that the default network connection may be GSM or LTE or any other cellular network connection.

The steps described above may be performed by a computer program including appropriate instructions which are executable by a processor of the mobile telecommunications device. The computer program may be stored on a computer-readable medium, such as a electronic memory, optical or magnetic disc etc.

A prototype implementation for an Android based device will now briefly be described by way of further example.

A basic algorithm may be implemented as a prototype on an android device using the android Application Programming Interfaces (API_{S}), the names of which are underlined below.

The client wakes up when an event (data activity over 3G) is triggered. To realise this functionality a TelephonyManager class may be used. The TelephonyManager is a specific implementation of a DataStateListener, which will inform the TelephonyManager application when such an event is active. The DataStateListener implementation will then inform or activate the main algorithm. The algorithm checks the WiFi environment for new available networks. A BroadcastReceiver implementation is used to scan the WiFi networks, to react to WiFiscan results. An instance of the WifiManager is used to initiate scans or to modify the WiFi state.

If scan results are available the algorithm will check the minimum signal strength of the available networks. Only networks with signal strength better than a defined minimum (e.g. -60 dBm) are used by the algorithm.

The signal level of -60 dBm will reduce the probability that a user will leave the WiFi coverage very fast.

A selection of a WiFi network will be based on based on the priority level - e.g. signal quality level. If no configured network is available, the algorithm will switch off the WiFi interface and try to connect to the WiFi interface again after a specified time.

If a connection is available and the signal strength/quality criterion is fulfilled, the results will be used to connect to the networks based on the priority level. The algorithm will then connect to the available network with the highest priority and checks the data throughput. One possibility is to check the network speed to a specific server which is setup specifically for the purpose of assessing network speed (i.e. by a network operator or company specializing in assessing network speed). Another possibility is to use a web server which is typically popular with customers, i.e. reflects customer expectation (e.g. www.google.com). Another possibility is to use three different servers (e.g. www.google.com, www.vodafone.com, www.cnn.com).

The latter possibility solves the problem of a single bad server, which is not reachable. The estimation of the current connection for this algorithm could be done, based on the other two servers. The functionality of the algorithm is not only dependant on one internet service.

If the Quality of service criteria fulfilled, e.g. a minimum data throughput of 256 kBit/s, the algorithm will switch to the network connection, and switches off the current connection. The data traffic is then switched to the new data connection. Other quality of service criteria may include latency, which is determined using network ping commands.

The quality of service will be checked periodically, after a specified time (e.g. a minute).

If the signal level below a low level (e.g. -80 dBm) or the Quality of Service is bad (e.g. data rate below 256 kbit/s, or latency above 400ms, or three are too many TCP retransmission requests) , the algorithm will switch to another network in the priority list. The algorithm will try to connect to another network before the device will be disconnected due to low signal level.

Another alternative way to check the quality of service is to send a series of "Ping" commands (e.g. 5 ping commands) with different packet sizes ((e.g. 1500 Bytes) to a server and to measure the average time needed to deliver these packets. The time the ping takes would be a combined measure of latency and data throughput - both are important for the user Quality of Experience (QoE) and thus two different network connections could be compared, or the quality of a connection could be compared to a predefined threshold when making the decision for handover.

### REFERENCE SIGN LIST

- 1:: mobile device
- 2:: MSC
- 3:: base station
- 4:: base station
- 5:: base station
- 6:: MSC
- 7:: base station
- 8:: base station
- 9:: base station
- 10:: HLR
- 11:: VLR
- 14:: VLR
- 16:: SGSN
- 18:: SGSN
- 20:: SIM
- 22:: Core network
- 30:: service provider 30
- 32:: internet
- 33:: access point
- 34:: intelligent air interface selection client
- 36:: memory which stores the authentication credentials of known networks

## Claims

1. A mobile telecommunications device including cellular communication means operable to communicate with a cellular telecommunications network base station, wireless communication means operable to communicate with a non-cellular wireless access point, and control means operable to selectively automatically enable the wireless communication means in response to a trigger.

2. The device of claim 1, wherein the control means is operable to determine the quality of a communication path to the access point.

3. The device of claim 2, wherein the control means is operable to select one of a plurality of access points in dependence upon the quality of the communication path to each of the access points.

4. The device of claim 3, wherein the control means is operable to switch between the respective access points in dependence upon changes in quality of the communication paths.

5. The device of any one of claims 1 to 4, wherein the control means is operable to disable the wireless communication means.

6. The device of claim 5, wherein the control means is operable to detect the status of the power supply of the mobile telecommunications device and to disable the wireless communication means in dependence thereon.

7. A method of operating a mobile telecommunications device including cellular communication means operable to communicate with a cellular telecommunications network base station and wireless communication means operable to communicate with a non-cellular wireless access point, the method including selectively automatically enabling the wireless communication means in response to a trigger.

8. The method of claim 7, including determining the quality of a communication path to the access point.

9. The method of claim 8, including selecting one of a plurality of access points in dependence upon the quality of the communication path to each of the access points.

10. The method of claim 9, including switching between the respective access points in dependence upon changes in quality of the communication paths.

11. The method of any one of claims 7 to 10, including selectively disabling the wireless communication means.

12. The method of claim 11, including detecting the status of the power supply of the mobile telecommunications device and disabling the wireless communication means in dependence thereon.

13. A computer program including instructions executable by a mobile telecommunications device having cellular communication means operable to communicate with a cellular telecommunications network base station and wireless communication means operable to communicate with a non-cellular wireless access point, the instructions controlling selective automatic enabling of the wireless communication means in response to a trigger.

14. A computer-readable medium having computer-executable instructions adapted to cause a mobile telecommunications device to perform the method of any one of claims 7 to 12.
